# EUROPEAN PATENT APPLICATION

(11) **EP 1 366 810 A1**
(43) Date of publication of application: **03.12.2003**
(21) Application number: 02703904.9
(22) Date of filing: 26.02.2002
(51) Int. Cl.: B01J 20/34

(54) **METHOD FOR REGENERATING ADSORBENT**

(30) Priority: 28.02.2001 JP 2001054871; 13.07.2001 JP 2001214211
(71) Applicant: IDEMITSU KOSAN CO., LTD., Tokyo 100-8321 (JP)
(72) Inventor: SUZUKI, Motoshi, Sodegaura-shi, Chiba 299-0293 (JP); YODA, Toshiaki, Sodegaura-shi, Chiba 299-0293 (JP)
(74) Representative: Gille Hrabal Struck Neidlein Prop Roos
(86) International application number: JP0201728
(87) International publication number: WO02068116

(57) **Abstract**

A process for regenerating an adsorbent having adsorbed hardly decomposable substances. The process comprises decomposing the hardly decomposable substances by bringing the substances into contact with a microorganisms and/or an enzyme at an inside or a peripheral portion of pores of the adsorbent. The adsorbent can be regenerated by decomposing and removing the adsorbed substances which are hardly decomposable and harmful to living organisms, such as bisphenols, safely from the adsorbent without adverse effects on the environment such as the secondary pollution.

## Description

### TECHNICAL FIELD

The present invention relates to a process for regenerating an adsorbent having adsorbed substances which are hardly decomposable and harmful to living things such as bisphenols. More particularly, the present invention relates to a process for regenerating an adsorbent having adsorbed substances which are hardly decomposable and harmful to living things by safely decomposing the adsorbed substances and removing the substances from the adsorbent without adverse effects on the environment such as the secondary pollution.

### BACKGROUND ART

Endocrine-disrupting chemicals which are present in the environment (referred to as environment hormones, occasionally) disrupts endocrine when they are taken into the inside of living organisms and exhibit adverse effects on the health and the ecological system such as disturbances on reproduction. On the human being, in particular, adverse effects on fetuses and infants are worried. Hardly decomposable substances exhibiting strong toxicity, the carcinogenic effects and the teratogenicity such as the environment hormones cause a great social problem since these substances remain in the natural environment once these substances are released into the environment. The hardly decomposable substances are unintentionally formed in a wide range of fields including materials for resins, plasticizers used for the resins, surfactants, dyes, agricultural chemicals and raw materials for these substances during the processes for producing these substances and also during incineration of garbage. Among these hardly decomposable substances, dioxins are released into the natural environment from incineration facilities for city garbage and industrial wastes and the adverse effects of the dioxins are regarded to be a particularly great problem. Compounds having various structures are included in the dioxins and polychlorinated dibenzo-p-dioxin, polychlorinated dibenzofuran and coplanar PCB are known as compounds exhibiting particularly strong toxicity. It is considered that, since the dioxins are hardly decomposed by living organisms, the compounds are absorbed into the bodies of various living organisms, go through the food chain and, finally, accumulated and concentrated in the bodies of animals, exhibiting the carcinogenic effects and the teratogenicity.

Technology which does not cause the discharge of these hardly decomposable substances, technology for preventing the discharge of these substances and technology for the recovery of these substances after being discharged are being developed. The technology for preventing the discharge of these substances include physical processes, chemical processes and biological processes. The adsorption process is one of the physical processes. As the adsorption process, an adsorption process comprising adding active carbon into water contaminated with hardly decomposable substances [Technology for Treating Dioxins, edited by Naomichi Hirayama, published by CMC Co., Ltd., pages 197 to 205, 1998] and a process comprising placing active carbon into an exhaust gas have been proposed. However, in these technologies, the active carbon adsorbing the hardly decomposable substances has the hardly decomposable substances remaining at the inside and the active carbon having adsorbed the hardly decomposable substances cannot be disposed without any treatments. The active carbon used for adsorption of the hardly decomposable substances are being incinerated or buried for disposal and there is the great danger of the secondary pollution such as pollution with the gas discharged by the incineration and with the contaminated water eluted from the landfill for the burial. Therefore, development of the safe and economical process for the treatment of the hardly decomposable substances has been desired.

A process for biological treatment comprising adsorbing and decomposing the hardly decomposable substances in waste water using active carbon as the support is proposed [Water Treatment by Fixation with Microorganisms, published by CMC Co., Ltd., pages 65 to 82, 2000]. However, this process is not applied to waste water contaminated with hardly decomposable substances. A process for decomposition of dibenzofuran by active carbon and bacteria which are fixed together is reported [Boku et al., Journal of the Society of Water Environment, volume 13, number 4, pages 312 to 315, 1996]. However, decomposition of polychlorinated dibenzofurans which are substituted with chlorine atoms and exhibit strong toxicity is not mentioned in this report. In the case of microorganisms such as bacteria which absorb hardly decomposable substances into the cell body and decompose the absorbed substances, the hardly decomposable substances must be decomposed either by treating the substances spontaneously eluted out of the support having adsorbed the substances or by the contact of the substances with the bacteria before the substances are adsorbed since the microorganisms cannot penetrate into pores to which the hardly decomposable substances are adsorbed. Moreover, bacteria cannot decompose dioxins which are substituted with 4 or more halogen atoms and exhibit strong toxicity although aromatic compounds having no substituted halogen atoms and dioxins which are substituted with 1 to 3 halogen atoms and exhibit no toxicity can be decomposed [Bioindustry, 10, 497-507, 1993]. Therefore, it is considered that polychlorodibenzofuran exhibiting strong toxicity cannot be decomposed in accordance with the process for decomposition of dibenzofuran using active carbon and bacteria which are fixed together.

A process for decomposition of active carbon having adsorbed environment hormones such as bisphenol A using bacteria [Japanese Patent Application Laid-Open No. 2001-17991] is disclosed. However, the environment hormones cannot be decomposed unless the environment hormones are eluted out of the pores and brought into contact with the bacteria since the bacteria which decompose the environment hormones cannot penetrate into pores of the adsorbent.

Due to the above reasons, development of technology for decomposing and removing hardly decomposable substances such as bisphenols, typical examples of which is bisphenol A, at the inside of pores of the support having adsorbed the substances so that the substances can be reused or safely disposed, has been desired. Development of technology for improving the efficiency of decomposition of bisphenols with microorganisms and enzymes and for increasing the life of the activity of decomposition in the biological treatments has also been desired.

Thus, the present invention has an object of providing a process for regenerating an adsorbent which has been used for the adsorption treatment by decomposing the hardly decomposable substances harmful to living organisms described above and, in particular, bisphenols at the inside of pores of the adsorbent and removing the hardly decomposable substances.

### DISCLOSURE OF THE INVENTION

As the result of extensive studies by the present inventors to overcome the above problems, it was found that some filamentus fungi released enzymes and radicals decomposing hardly decomposable substances to the outside of the cell body of the fungi and the hardly decomposable substances could be decomposed and removed at the inside of pores of the support having adsorbed the substances. The present invention has been completed based on this knowledge.

The present invention provides:
(1) A process for regenerating an adsorbent having adsorbed hardly decomposable substances, the process comprising decomposing the hardly decomposable substances by bringing the hardly decomposable substances into contact with at least one of microorganisms and enzymes at an inside or a peripheral portion of pores of the adsorbent;
(2) A process described in (1), wherein the hardly decomposable substances are brought into contact with at least one of microorganisms and enzymes after the adsorbent having adsorbed hardly decomposable substances is treated by sterilization;
(3) A process described in (1), wherein waste water comprising the hardly decomposable substances is treated by sterilization, the sterilized waste water is passed through an adsorbent layer so that the hardly decomposable substances are adsorbed to the adsorbent layer, and the adsorbed hardly decomposable substances are brought into contact with at least one of microorganisms and enzymes;
(4) A process described in (1), wherein the hardly decomposable substances and at least one of microorganisms and enzymes are brought into contact with each other at a pH in a range of 3 to 10;
(5) A process described in (1), wherein the hardly decomposable substances and at least one of microorganisms and enzymes are brought into contact with each other while a gas comprising oxygen is supplied;
(6) A process described in (1), wherein the hardly decomposable substances and at least one of microorganisms and enzymes are brought into contact with each other in a presence of an organic solvent;
(7) A process described in (1), wherein the adsorption of the hardly decomposable substances to the adsorbent and the contact between the adsorbed hardly decomposable substances and at least one of microorganisms and enzymes are conducted simultaneously;
(8) A process described in (1), wherein the adsorbed hardly decomposable substances are brought into contact with the microorganisms after the adsorbent having adsorbed hardly decomposable substances is treated by sterilization in a presence of a carbon source;
(9) A process described in any one of (1) to (8), wherein the hardly decomposable substance is at least one substance selected from a group consisting of halogenated dioxins, halogenated benzofurans, polychlorinated biphenyl, alkylphenols, halogenated phenols, halogenated alkanes, halogenated alkenes, esters of phthalic acids and polycyclic aromatic hydrocarbons;
(10) A process described in any one of (1) to (8), wherein the hardly decomposable substance is a bisphenol;
(11) A process described in any one of (1) to (8), wherein the adsorbent is an inorganic porous material or an organic porous material;
(12) A process described in any one of (1) to (8), wherein the adsorbent is a material selected from active carbon, ion exchange resins, activated clay, zeolite and ashes of incineration;
(13). A process described in any one of (1) to (8), wherein the microorganism is a filamentus fungus;
(14) A process described in (13), wherein the filamentus fungus is a fungus selected from white rot fungi and fungi belonging to genera of Aspergillus, Rhizoctonia and Botrytis;
(15) A process described in any one of (1) to (8), wherein the enzyme is an enzyme which is produced by the microorganism to an outside of a cell body of the microorganism and decomposes the hardly decomposable substances;
(16) A process described in any one of (1) to (8), wherein at least one enzyme selected from peroxidase, lignin peroxidase and manganese peroxidase is used as the enzyme and the hardly decomposable substances are brought into contact with the selected enzyme in a presence of hydrogen peroxide;
(17) A process described in any one of (1) to (8), wherein laccase is used as the enzyme and the hardly decomposable substances are brought into contact with laccase;
(18) A process described in (17), wherein laccase is used as the enzyme and the hardly decomposable substances are brought into contact with laccase in a presence of a mediator;
(19) A process described in (8), wherein the carbon source is a substance comprising at least one compound selected from sugars, cellulose ethers soluble in water, cellulose esters and cellulose esters soluble in water;
(20) A process described in (10), wherein the adsorbent having adsorbed bisphenols is regenerated after salts present in an apparatus for regeneration are removed;
(21) A process described in (20), wherein the salts are salts having chlorine atom;
(22) A process described in (10), wherein the bisphenol is brought into contact with at least one of filamentus fungi and enzymes in a presence of molecular or atomic oxygen; and
(23) A process described in (10), wherein the bisphenol is obtained as a waste substance discharged from apparatuses for producing polycarbonates and epoxy resins.

### THE MOST PREFERRED EMBODIMENT TO CARRY OUT THE INVENTION

The embodiments of the present invention will be described in the following.

The process for regenerating an adsorbent having adsorbed hardly decomposable substances of the present invention is characterized in that the process comprises decomposing the hardly decomposable substances by bringing the hardly decomposable substances into contact with at least one of microorganisms and enzymes at the inside or a peripheral portion of pores of the adsorbent. The adsorbent used for the regeneration in the present invention is an adsorbent which comprises an inorganic or organic porous support used for cleaning exhaust gases and waste water containing hardly decomposable substances and has the hardly decomposable substances adsorbed at the inside of the pores.

Examples of the porous support suitably used in the above include inorganic supports such as zeolite, diatomaceous earth, ashes of incineration and calcium oxide and organic supports such as active carbon and ion exchange resins. Among these porous supports, active carbon is preferable. Active carbons having meso pores having diameters of 20 to 500 Å and macro pores having diameters of 500 Å or greater in the entire pore volume and the volume of the pores of 0.15 liters/g or greater, preferably 0.20 liters/g or greater and most preferably 0.25 liters/g, are preferable.

Examples of the hardly decomposable substances adsorbed at the inside of pores of the adsorbent include halogenated dioxins, halogenated benzofurans, polyhalogenated biphenyls, alkylphenols, halogenated phenols, halogenated alkanes, halogenated alkenes, esters of phthalic acids and polycyclic aromatic hydrocarbons. Specific examples of the hardly decomposable substances include dioxins, polychorinated biphenyls, polybrominated biphenyls, hexachlorobenzene, pentachlorophenol, 2,4,5-trichlorophenoxyacetic acid, 2,4-dichlorophenoxyacetic acid, amitrole, atrazine, alachlor, simazine, hexachlorocyclohexane, ethylparathion, carbaryl, chlordane, oxychlordane, trans-nonachlor, 1,2-dibromo-3-chloropropane, DDT, DDE, DDD, kersen, aldrin, endrin, tildrin, endosulfan (benzoepin), heptachlor, heptachlor epoxide, malathion, methomyl, methoxychlor, mirex, nitrophene, toxaphene, tributyltin, triphenyltin, trifluralin, alkylphenols (C5), nonylphenol, 4-octylphenol, di-2-ethylhexyl phthalate, butyl benzyl phthalate, di-n-butyl phthalate, dicyclohexyl phthalate, diethyl phthalate, benz(a)pyrene, 2,4-dichlorophenol, 2-ethylhexyl adipate, benzophenone, 4-nitrotoluene, octachlorostyrene, aldicarb, benomyl, kepone (chlordecone), manzeb (mancozeb), maneb, metiram, metribuzin, dipermetrin, esfenvalerate, fenvalerate, permetrin, vinclozolin, zineb, ziram, dipentyl phthalate, dihexyl phthalate, dipropyl phthalate, styrene dimer, styrene trimer and n-butylbenzene.

Among the above compounds, the dioxin is a term generally meaning halogenated dioxins and halogenated dibenzofurans which are obtained by substituting hydrogen atoms in two benzene rings of dibenzo-p-dioxin or dibenzofuran with chlorine atoms or bromine atoms. The dioxins include a great variety of compounds having various numbers of chlorine atoms or bromine atoms as the substituents at various positions on the benzene rings. Among the dioxins, polychlorinated compounds having 4 or more chlorine atoms in one molecule exhibit particularly high toxicity to human bodies. Examples of such polychlorinated dibenzo-p-dioxin having the above structure include 2,3,7,8-tetrachlorodibenzo-p-dioxin, 1,2,3,7,8-pentachlorodibenzo-p-dioxin, 1,2,3,4,7,8-hexachlorodibenzo-p-dioxin, 1,2,3,6,7,8-hexachlorodibenzo-p-dioxin, 1,2,3,7,8,9-hexachlorodibenzo-p-dioxin, 1,2,3,4,6,7,8-heptachlorodibenzo-p-dioxin and 1,2,3,4,6,7,8,9-octachlorodibenzo-p-dioxin;

Examples of the polychlorinated dibenzofuran include 2,3,7,8-tetrachlorodibenzofuran, 1,2,3,7,8-pentachlorodibenzofuran, 2,3,4,7,8-pentachlorodibenzofuran, 1,2,3,4,7,8-hexachlorodibenzofuran, 1,2,3,6,7,8-hexachlorodibenzofuran, 1,2,3,7,8,9-hexachlorodibenzofuran, 2,3,4,6,7,8-hexachlorodibenzofuran, 1,2,3,4,6,7,8-heptachlorodibenzofuran, 1,2,3,4,7,8,9-heptachlorodibenzofuran and 1,2,3,4,6,7,8,9-octachloro-dibenzofuran.

Examples of the polychlorinated biphenyl include coplanar PCB's having chlorine atoms at the positions other than the ortho-positions such as 3,3',4,4'-tetrachlorobiphenol, 3,3',4,4',5-pentachlorobiphenol and 3,3',4,4',5,5'-hexachlorobiphenol.

Examples of the biphenol adsorbed at the inside of pores of the adsorbent include 2,2-bis(4-hydroxyphenyl)propane and 1,1-bis(4-hydroxyphenyl)cyclohexane. Among these compounds, 2,2-bis(4-hydroxyphenyl)propane (bisphenol A) is suitable for the process of the present invention. It is preferable that the process of the present invention is applied to bisphenols discharged from apparatuses for producing polycarbonates and epoxy resins.

As the microorganism used for decomposition of the hardly decomposable substances adsorbed at the inside of pores of the adsorbent, filamentus fungi are preferable. As the filamentus fungus used for decomposition of bisphenols, white rot fungi are preferable. Examples of the filamentus fungus include white rot fungi such as fungi belonging to genera of Trametes, Schizophyllum, Phanerochaete, Bjerkandera, Irpex, Pleurotus, Myceliophthora, Lentinera, Pycnoporus, Lentinus, Funaria, Phycnoporus, Merulius, Myceliophtora, Coprinus, Agaricus, Phoriota, Flammulina, Ganoderma, Daedaleopsis, Favolus, Lyophyllum and Auricularia; and filamentus fungi producing oxidizing enzyme such fungi belonging to genera of Rhizoctonia, Botrytis and Aspergillus.

Among these filamentus fungi, white rot fungi belonging to the genera of Trametes, Schizophyllum, Phanerochaete, Bjerkandera, Irpex, Pleurotus, Myceliophthora, Lentinera and Pycnoporus are preferable. Fungi and enzymes produced by other filamentus fungi, such as fungi belonging to the genus of Aspergillus, into which a gene of an enzyme decomposing the hardly decomposable substances has been introduced, may also be used.

Examples of the enzyme decomposing the hardly decomposable substances include lignin peroxidase, manganese peroxidase, peroxidase, monooxygenase, dioxygenase and laccase. The enzyme may be used after the enzyme produced by and discharged from a microorganism is separated from the culture medium using an ion exchange resin or as a mixture of the live microorganism and the enzyme. When lignin peroxidase, manganese peroxidase or peroxidase is used as the enzyme, it is effective that the enzyme is brought into contact with the hardly decomposable substances in the presence of hydrogen peroxide or a microorganism producing hydrogen peroxide. When laccase is used as the enzyme, it is preferable that a mediator is added so that the activity of the enzyme is most effectively exhibited. As the mediator, for example, phenol compounds such as 1-hydroxybenzotriazole and aniline-based compounds such as 2,2'-azinobis(3-ethylbenzothiazoline-6-sulfonic acid) can be advantageously used. The activity of laccase can be exhibited also in the absence of a mediator.

The filamentus fungi belonging to the genera of Trametes and Schizophyllum can be cultured in accordance with a conventional method of culture. For example, when the fungi is cultured in a small amount, the culture can be conducted using a culture medium of potato dextrose at 10 to 40°C for 5 to 30 days. When the fungi is cultured in a great amount, the culture may be conducted in accordance with the liquid culture process in a tank or the solid culture process using solid media derived from plants such as whole grains and brans of barley and wheat and inorganic porous supports impregnated with sugar, nitrogen, phosphorus and minerals. When the temperature of the culture is lower than 10°C, the growth of the microorganism is slow and the amount of the discharged enzyme is small. When the temperature of the culture exceeds 40°C, the growth of the microorganism is slow. It is preferable that pH of the microorganism or the enzyme used above is adjusted in the range of 3 to 10 and, more preferably, in the range of 3.5 to 9. When pH is smaller than 3 or exceeds 10, the amount of the enzyme discharged from the microorganism decreases and the value of pH is outside the optimum range for the enzyme. In the culture of the microorganism, the concentration of microorganism in the obtained product of the culture is in the range of 1 × 10² cfu (colony forming unit) or greater, preferably in the range of 1 × 10² to 1 × 10⁸ cfu and more preferably in the range of 1 × 10³ to 1 × 10⁷ cfu per 1 g of the dried plant organic substances. Any of the hyphae and spores can be used for the culture of the filamentus fungi. In general, the hyphae are used due the easiness of the culture. The enzyme obtained by the culture can be used in the form obtained in the culture medium or after being purified.

When the hardly decomposable substances are bisphenols, the process for regeneration of the adsorbent is characterized in that the bisphenols are decomposed by being brought into contact with at least one of the enzyme and the filamentus fungus at the inside of pores of the adsorbent to which the bisphenols are adsorbed. Bisphenol A as a typical example of the bisphenols is frequently contained in waste water from the production processes of various polymers using bisphenol A as the raw material or in liquids eluted from a landfill in which polymers produced by using bisphenol A as the raw material are buried for disposal. It is found that the waste water and the eluted liquid contain salts such as halogenated salts including salts having chlorine atoms which are mixed into the waste water and the eluted liquid during the polymerization to produce bisphenol A or during the disposal and these salts adversely affect the decomposition of bisphenol A. Therefore, it is preferable that a desalting treatment is conducted when the adsorbent is regenerated.

Examples of the above desalting treatment include a process in which the bisphenols are adsorbed to an inorganic or organic porous support and salts alone are desorbed thereafter, a separation process using a membrane, and a process in which bisphenols are extracted with an organic solvent, the organic solvent is then removed and the bisphenols are suspended in water and decomposed. Among these process, the desalting process by adsorption is preferable in the present invention due to the easiness of the operation.

When the hardly decomposable substances are decomposed by bringing the hardly decomposable substances adsorbed at the inside of pores of the adsorbent comprising a porous support into contact with at least one of the microorganisms and the enzyme, it is preferable that miscellaneous other microorganisms attached to the adsorbent are removed by sterilization in advance and the adsorbent is regenerated in the absence of miscellaneous other microorganisms. Since, in general, various miscellaneous other microorganisms are present in the adsorbent which has been used for the cleaning treatments of exhaust gases and waste water, the condition advantageous for the growth of the useful microorganism after inoculation with the useful microorganism is obtained by removing these miscellaneous other microorganisms by the sterilization. The sterilization is not always necessary when the enzyme is used.

The sterilization can be conducted by using a heating treatment, a chemical treatment or a physical treatment. When the used adsorbent is sterilized by the heating treatment, the sterilization can be conducted by heating the adsorbent at a temperature in the range of 80 to 121°C. The time of the heating treatment is different depending on the temperature of the heating and, in general, in the range of 2 seconds to 6 hours. Since almost all miscellaneous other microorganisms are killed by heating at 121°C, it is not necessary that the sterilization is conducted at a temperature exceeding 121°C.

When the sterilization is conducted by using the chemical treatment, ethyl alcohol, limonene, veratryl alcohol, diethyl dicarbonate, hydrogen peroxide, hypochlorous acid, hydrochloric acid, ethylene oxide, ozone or chloropicrin can be used as the agent for the treatment. The agent for the treatment may be used directly or as a solution with a diluent such as water. For example, when ethyl alcohol is used, an aqueous solution having a concentration in the range of about 60 to 100% (w/v) is preferable. When limonene, veratryl alcohol or diethyl dicarbonate is used, the agent can be used in a manner similar to ethyl alcohol. Limonene or veratryl alcohol may be used in combination with ethyl alcohol. When hydrogen peroxide is used, an aqueous solution having a concentration smaller than 30% (w/v) is preferable. Hydrogen peroxide may also be used as a mixed aqueous solution with ethyl alcohol. For the sterilization by using the physical treatment, irradiation with ultraviolet light is preferable.

When the hardly decomposable substances adsorbed at the inside of pores of the adsorbent is decomposed by bringing the substances into contact with at least one of the microorganisms and the enzymes, the growth of miscellaneous other microorganisms can be suppressed also by selectively promoting the growth of the useful microorganism in accordance with a process other than the sterilization. For example, when a white rot fungus is used, it is possible that the growth of miscellaneous other microorganisms are suppressed by using a cellulose carbon source and, preferably, a soluble cellulose carbon source such as carboxymethylcellulose, cellulose ethers soluble in water and cellulose modified with phosphoric acid as the carbon source since it is difficult that these carbon source are used for the growth of miscellaneous other microorganisms.

When the hardly decomposable substances, which are adsorbed at the inside of pores of a used adsorbent which has been sterilized in accordance with the heating treatment, the chemical treatment or the physical treatment as described above, are decomposed by being brought into contact with the microorganism, it is preferable that the microorganism is cultured in the presence of the used adsorbent. In the case of the process industry, frequently, no microorganisms are present at the inside of apparatuses. When waste water from the process industry in the above condition can be introduced into the apparatus for decomposition of the hardly decomposable substances without exposure to the outside atmosphere, the sterilization treatment such as the heating treatment can be omitted.

The condition for the decomposition of the hardly decomposable substances by the microorganism is the same as that for the growth of the microorganism. The temperature is in the range of 10 to 40°C and, preferably, in the range of 15 to 35°C. pH is in the range of 3 to 10 and, preferably, in the range of 3.5 to 9. Since the filamentus fungi are aerobic microorganisms, the decomposition is conducted while a small amount of a gas containing oxygen and, preferably, the air is supplied to the reactor of the decomposition. By culturing the microorganism in the presence of the hardly decomposable substances adsorbed at the inside of pores of the adsorbent, the decomposition of the hardly decomposable substances with oxygen and radicals proceeds by the working of the enzymes decomposing the hardly decomposable substances which are discharged to the outside of the cell body and radicals decomposing the hardly decomposable substances. Bisphenols attached to sludge formed in the process of the treatment of waste water can also be decomposed in a manner similar to the above.

To achieve the decomposition more effectively, it is preferable that the decomposition is conducted in the presence of a nutrient for the filamentus fungi. Various substances can be used as the nutrient. As the nutrient, for example, sugars such as glucose, carbon sources such as cellulose, carboxymethylcellulose (CMC) and potato extracts; nitrogen sources such as ammonium salts and urea; and nutrients soluble in water such as corn steep liquor, meat extracts, yeast extracts and peptone; cereals such as barley, wheat, rice and corn; wheat bran, rice bran, corn broth and soybean cakes as byproducts of cereals; can be used. Wood chips, coconut fibers, rinds of citrus fruits and porous clay minerals may also be used. When the nutrient is soluble in water and easily adsorbed to the absorbent, the amount of the nutrient is selected in the range of 0.01 to 10% by mass based on the amount of the adsorbent. When the nutrient is a solid nutrient which is not easily adsorbed to the adsorbent, the amount of the nutrient is selected in the range of 0.001 to 50% by mass and, preferably, in the range of 0.001 to 10% by mass.

To effectively achieve the decomposition, an organic solvent may be added to the reaction system. As the organic solvent, organic solvents selected from the group consisting of ketones having 3 to 6 carbon atoms, alcohols having 1 to 4 carbon atoms, carboxylic acids having 1 to 6 carbon atoms and esters of carboxylic acids having 1 to 6 carbon atoms are preferable. Examples of the ketone having 3 to 6 carbon atoms include acetone, methyl ethyl ketone, diethyl ketone and methyl isobutyl ketone. Examples of the alcohol having 1 to 4 carbon atoms include methyl alcohol, ethyl alcohol, isopropyl alcohol, various types of butyl alcohol, ethylene glycol, propylene glycol and butylene glycol. Examples of the carboxylic acid having 1 to 6 carbon atoms include formic acid, acetic acid, oxalic acid, propionic acid, lactic acid, butyric acid, malic acid, fumaric acid and maleic acid. Examples of the ester of a carboxylic acid having 1 to 6 carbon atoms include methyl formate, ethyl formate, methyl acetate, ethyl acetate, methyl propionate, ethyl propionate, methyl butyrate and ethyl butyrate. The organic solvent is added in an amount in the range of 0.001 to 20% by volume and, preferably, in the range of 0.01 to 10% by volume based on the amount of the waste water.

By the addition of the organic solvent, elution of the hardly decomposable substances adsorbed at the inside of pores of the adsorbent and products formed by the decomposition of the hardly decomposable substances with the microorganism from the inside of the adsorbent can be facilitated. These organic solvents have a great amity with water and the hardly decomposable substances are eluted to the peripheral portions of the pores from the inside of the pores and can be effectively brought into contact with the microorganism and the enzyme while the activities of the microorganism and the enzyme are not adversely affected. By adding a solvent selected from the group consisting of n-paraffins, cycloparaffins and esters of higher fatty acids which are liquid at the ordinary temperature in combination with the above organic solvent, it is prevented that the hardly decomposable substances are adsorbed again back into the inside of pores of the adsorbent. Examples of the solvent for preventing the hardly decomposable substances from being adsorbed again include n-decane, n-undecane, n-dodecane, n-tridecane, n-tetradecane, n-pentadecane, n-hexadecane, cyclooctane, cyclodecane, methyl oleate, ethyl oleate, methyl linoleate, ethyl linoleate, methyl linolenate and ethyl linolenate.

When the adsorption of the hardly decomposable substances to the adsorbent and the contact between the hardly decomposable substances adsorbed to the adsorbent and at least one of the microorganisms and the enzymes are conducted simultaneously, the process may be as follows: an adsorption layer which is disposed in an adsorption tank in advance and comprises a mixture of a fresh adsorbent and nutrients is inoculated with the microorganism; the microorganisms is grown in the layer; a pipe for supplying the air from the outside is disposed directly below the adsorption tank; and waste water is introduced into the adsorption tank having the adsorption layer while the air is supplied to the adsorption layer through the pipe. In this case, since the rate of decomposition of the hardly decomposable substances adsorbed to the adsorbent with at least one of the microorganisms and the enzymes is slower than that of the hardly decomposable substances in the waste water, it is preferable that two or more adsorption tanks are arranged in parallel and the pre-treatments and the post-treatments are conducted in the tanks not in use for the decomposition.

In the adsorbent regenerated in accordance with the process of the present invention, the amount of the hardly decomposable substances can be decreased to the range sufficiently safe for handling for the reuse due to the decomposition of the hardly decomposable substances adsorbed at the inside of pores of the used adsorbent with the microorganism and the enzyme. Therefore, since the adsorbent is not disposed immediately after using for the adsorption of the hardly decomposable substances just once but can be used repeatedly until the properties as the adsorbent deteriorate, the process is remarkably economical. Moreover, when the adsorbent for the hardly decomposable substances cannot be used any more and is disposed, the disposal does not affect the environment adversely since the amount of the residual hardly decomposable substances can be sufficiently decreased before the disposal. As the enzyme, an enzyme produced in advance in accordance with the liquid culture or the solid culture can be used.

The present invention will be described more specifically with reference to examples in the following. However, the present invention is not limited to the examples.

### Examples I-1 to I-6 and Comparative Example I-1 and I-2

### (1) Culture of microorganisms

A potato dextrose culture medium [manufactured by DIFCO Company] in an amount of 24 g per 1 liter of city water was dissolved into city water. To the resultant solution, 5 g of carboxymethylcellulose was added and a culture medium was prepared. Into each of 8 Erlenmeyer flasks having an inner volume of 2 liters, 400 ml of the prepared culture medium was placed and the flasks were sealed with cotton caps and sterilized by heating at 121°C for 20 minutes.

As the microorganism, Schizophyllum commune: IFO6505 was used in Examples I-1 and I-2, Trametes versicolor: IFO4941 was used in Examples I-3 and I-4, and Pleurotus pulmonaris: IFO31345 was used in Examples I-5 and I-6. The culture media cooled at the room temperature were inoculated with the respective microorganisms. As the seed fungi of these microorganisms, seed fungi prepared by growing in an oat meal agar culture medium were used. Each seed fungus in an amount of one platinum microspoonful was used for the inoculation and cultured at 26°C under the rotation at 40 rpm. The obtained product of the culture was used as the source of inoculation with the microorganism.

### (2) Adsorption of hardly decomposable substances

As the apparatus for adsorption of hardly decomposable substances, a glass column having a diameter of 5 cm and a height of 30 cm which was packed with 80 g of particulate active carbon [the diameter of particles: 1.5 mm; the diameter of pores: 30 Å; and the volume of pores: 0.35 ml/g] was used. Twenty glass columns described above were arranged in parallel. Waste water obtained by adjusting pH of washing water for an exhaust gas containing dioxins and no microorganisms to 7 with sodium hydroxide was introduced into the glass columns through an inlet tube disposed at an upper portion of each glass column at a flow rate of 2 liters/hour and the dioxins in the waste water were adsorbed to the particulate active carbon. The introduction of the waste water was continued for 2 days. Waste water cleaned with the particulate active carbon was recovered at an outlet tube disposed at a lower portion of each glass column. It was confirmed that the recovered waste water contained 1.5% by mass of sodium chloride. When the introduction of the waste water was completed, 2 liters of water containing no microorganisms which was condensed from raw steam formed by a boiler was introduced through the columns and the particulate active carbon in the glass columns was desalted.

### (3) Decomposition of the hardly decomposable substances adsorbed to the adsorbent

In a chamber kept at a constant temperature of 28°C, 400 ml of each culture fluid of the microorganism obtained in (1) as described above was slowly added to the glass column desalted as described above through an inlet tube disposed at an upper portion of the glass column and the water in an excessive amount was taken out from an outlet tube at a lower portion of the glass column. Then, the air adjusted at the humidity of saturation by passing through water containing no microorganisms was introduced into the glass column from an inlet disposed at a lower portion of the glass column at a rate of 50 ml per minute.

For the decomposition of the hardly decomposable substances adsorbed to the inside of pores of the adsorbent, a culture fluid of the same microorganism was added to two glass columns. One of the columns was treated for decomposition of the hardly decomposable substances with the microorganism for 7 days and the other column was treated for 14 days. In Comparative Examples I-1 and I-2, the same procedures as those conducted in Examples I-1 to I-6 were conducted except that a culture medium inoculated with no microorganisms was added.

### (4) Evaluation of the degree of decomposition of the hardly decomposable substances

When the decomposition of the hardly decomposable substances in (3) described above was completed, the particulate active carbon in each glass column was taken out. The inside of each glass column was washed with 10 ml of toluene 3 times and the washing liquids were added to the particulate active carbon taken out from the respective glass column. The particulate active carbon from each glass column was transferred to a Soxhlet extractor and dioxins adsorbed to the particulate active carbon were extracted with toluene. The amount of the extracted dioxin was determined in accordance with the gas chromatography-mass analysis (GC-MS).

2,3,7,8-Tetrachlorodibenzo-p-dioxin toxicity equivalent (TEQ) of each chlorinated compound was obtained by multiplying the toxicity of the compound by the coefficient for conversion to the toxicity of 2,3,7,8-tetrachlorodibenzo-p-dioxin. The results are shown in Table I-1.

In Table I-1, "Example I-1 etc." are expressed as "Example 1 etc." for convenience. Comparative Examples are expressed in a similar manner. In Tables I-2 to I-5, Examples and Comparative Examples are expressed in a similar manner.

**Table I-1**

| | Microorganism | Time of decomposition (day) | Content of dioxins (pico g TEQ/g active carbon) |
|---|---|---|---|
| Example 1 | Schizophyllum commune IFO-6505 | 7 | 1,640 |
| | | | |
| Example 2 | Schizophyllum commune IFO-6505 | 14 | 1,360 |
| | | | |
| Example 3 | Trametes versicolor IFO-4941 | 7 | 2,790 |
| | | | |
| Example 4 | Trametes versicolor IFO-4941 | 14 | 1,830 |
| | | | |
| Example 5 | Pleurotus pulmonaris IFO-31345 | 7 | 2,950 |
| | | | |
| Example 6 | Pleurotus pulmonaris IFO-31345 | 14 | 1,230 |
| Comparative Example 1 | - | 7 | 6,820 |
| | | | |
| Comparative Example 2 | - | 14 | 6,740 |

### Examples I-7 to I-12 and Comparative Examples I-3 and I-4

### (1) Adsorption of hardly decomposable substances

As the waste water containing hardly decomposable substances, 30 liters of water which was circulated through a column for removing smoke (containing suspended substances) and contained dioxins in a great concentration was used. Particulate active carbon [the diameter of particles: 0.05 mm; the diameter of pores: 20 Å; and the volume of pores: 0.15 ml/g] was added to the waste water in an amount of 10 g as the mass of the dry material per 1 liter of the waste water. After pH of the resultant mixture was adjusted at 6.5 by adding sodium hydroxide, the mixture was continuously stirred at the room temperature for 24 hours and the dioxins were adsorbed to the particulate active carbon. Then, the particulate active carbon was separated by filtration of the treated waste water under suction and washed with 5 liters of city water for desalting.

### (2) Decomposition of hardly decomposable substances adsorbed to the adsorbent

Into each of 8 Erlenmeyer flasks having an inner volume of 100 ml, 10 g of the active carbon containing water which was obtained in (1) described above (the content of water: 56% (w/v)) was placed. To the active carbon in the flask, 1 g of a mixture of waste molasses (the content of water: 82% (w/v)) and corn steep liquor (the content of water: 78% (w/v)) in relative amounts of 1:1 was added as the nutrient. After the active carbon and the nutrient were mixed together, the flasks were sealed with silicone stoppers and sterilized in a boiling water bath for 1 hour.

The resultant flasks were each inoculated with the respective microorganisms shown in Table I-2. The microorganisms used for the inoculation were then cultured for the period of time shown in Table I-2 at 25°C and the dioxins adsorbed to the active carbon were decomposed by the microorganisms. During the process of the decomposition, 1 ml of city water sterilized in an autoclave was added to each flask at a frequency of once a week. In Comparative Examples I-3 and I-4, the same procedures as those conducted in Examples I-7 to I-12 were conducted except that the inoculation with microorganisms was not conducted.

### (3) Evaluation of the degree of decomposition of the hardly decomposable substances

When the decomposition in (2) described above was completed, the active carbons were recovered and the toxicity equivalents (TEQ) of the dioxins were obtained in accordance with the same method as that described in (4) of Examples I-4 to I-6. The results are shown in Table I-2.

**Table I-2**

| | Microorganism | Time of culture (day) | Content of dioxins (nano g TEQ/g active carbon) |
|---|---|---|---|
| Example 7 | Schizophyllum commune IFO-6505 | 30 | 21 |
| | | | |
| Example 8 | Schizophyllum commune IFO-6505 | 60 | 16 |
| | | | |
| Example 9 | Trametes versicolor IFO-4941 | 30 | 25 |
| | | | |
| Example 10 | Trametes versicolor IFO-4941 | 60 | 18 |
| | | | |
| Example 11 | Pleurotus pulmonaris IFO-31345 | 30 | 14 |
| | | | |
| Example 12 | Pleurotus pulmonaris IFO-31345 | 60 | 11 |
| Comparative Example 3 | - | 30 | 38 |
| | | | |
| Comparative Example 4 | - | 60 | 39 |

### Examples I-13 to I-18 and Comparative Examples I-5 and I-6

### (1) Adsorption of hardly decomposable substances

Waste water discharged during reverse washing of waste water and contained foreign substances such as fine particles of active carbon and particulate suspended substances was taken into an adsorption column packed with active carbon [the diameter of particles: 1.0 mm; the diameter of pores: 20 Å; and the volume of pores: 0.25 ml/g] and, after pH was adjusted at 7.0 by adding sodium hydroxide, was left standing for 12 hours. Since pH decreased to 6.2 after 12 hours, pH was adjusted at 7.0 again and the column containing the waste water was left standing for 12 hours. Then, pH was measured and was found to be 6.6. The waste water was filtered and the precipitates were recovered.

### (2) Decomposition of the hardly decomposable substances adsorbed to the adsorbent

After the precipitates obtained in (1) described above were uniformly mixed, 100 g of the precipitates (the content of water: 52% (w/v)) were added to each of 8 Erlenmeyer flasks having an inner volume of 500 ml. Then, after 10 g of corn steep liquor (the content of water: 78% (w/v)) was added to each Erlenmeyer flask, the flasks were sealed with silicone stoppers, placed into a boiling water bath at 100°C and sterilized for 2 hours.

After the treated flasks were cooled at the room temperature, the flasks were inoculated with the respective microorganisms shown in Table I-3. The microorganisms were then cultured by leaving the flasks standing at 28°C for the period of time shown in Table I-3. In Comparative Examples I-5 and I-6, the same procedures as those conducted in Examples I-13 to I-18 were conducted except that the inoculation with microorganisms was not conducted.

### (3) Evaluation of the degree of decomposition of the hardly decomposable substances

The toxicity equivalents (TEQ) of the dioxins in the cultured products obtained in (2) described above were obtained in accordance with the same method as that described in (4) of Examples I-4 to I-6. The results are shown in Table I-3.

**Table I-3**

| | Microorganism | Time of culture (day) | Content of dioxins (pico g TEQ/g precipitates) |
|---|---|---|---|
| Example 13 | Schizophyllum commune IFO-6505 | 30 | 1,860 |
| | | | |
| Example 14 | Schizophyllum commune IFO-6505 | 60 | 1,270 |
| | | | |
| Example 15 | Trametes versicolor IFO-4941 | 30 | 2,440 |
| | | | |
| Example 16 | Trametes versicolor IFO-4941 | 60 | 2,110 |
| | | | |
| Example 17 | Pleurotus pulmonaris IFO-31345 | 30 | 1,520 |
| | | | |
| Example 18 | Pleurotus pulmonaris IFO-31345 | 60 | 1,130 |
| Comparative Example 5 | - | 30 | 6,780 |
| | | | |
| Comparative Example 6 | - | 60 | 6,690 |

### Examples I-19 to I-48 and Comparative Examples I-7 to I-16

### (1) Adsorption of hardly decomposable substances

Active carbon [the diameter of particles: 0.10 mm; the diameter of pores: 20 Å; and the volume of pores: 0.25 ml/g] was dried at 160°C and cooled by being left standing in a desiccator containing silica gel. Into each of Erlenmeyer flasks having an inner volume of 500 ml, 10 g of the dried active carbon was placed.

To each flask, 100 ml of a culture fluid containing 5 g/liter of carboxymethylcellulose and 6 g/liter of a potato dextrose culture medium was added and the content of the flask was sterilized at 121°C for 15 minutes in an autoclave. To the fluids containing the active carbon and the culture fluid, the hardly decomposable substances shown in Table I-4 in amounts also shown in Table I-4 were added and the resultant mixtures were shaken under rotation at 100 rpm for 24 hours so that the hardly decomposable substances were adsorbed to the active carbon.

### (2) Decomposition of the hardly decomposable substances

The fluids containing the active carbon having adsorbed the hardly decomposable substances which were obtained in (1) described above were each inoculated with 10 ml of the culture fluid having the microorganisms cultured in accordance with the same procedures as those conducted in Example I-1 (1). The microorganisms were cultured by shaking the obtained fluid under rotation at 30 rpm at 28°C and the hardly decomposable substances were decomposed with the microorganisms. In Comparative Examples I-7 to I-16, the same procedures as those conducted in Examples I-19 to I-48 were conducted except that the inoculation with microorganisms was not conducted.

### (3) Evaluation of the degree of decomposition of the hardly decomposable substances

Each product of decomposition obtained in (2) described above was separated into the active carbon and a supernatant liquid. The active carbon and the supernatant liquid were each treated by extraction with ethyl acetate 3 times and the amounts of the residual hardly decomposable substances were measured in accordance with the high performance liquid chromatography. The results are shown in Table I-4.

**Table I-4 (1)**

| | Microorganism | Hardly decomposable substance | Amount of added substance (mg) | Time of decomposition (day) | Residual amount (mg) |
|---|---|---|---|---|---|
| Example 19 | Schizophyllum commune (IFO-6505) | p-t-butylphenol | 100 | 7 | 23 |
| | | | | | |
| Example 20 | same as above | p-t-butylphenol | 100 | 14 | 7 |
| | | | | | |
| Example 21 | same as above | p-t-butylphenol | 200 | 14 | 11 |
| | | | | | |
| Example 22 | same as above | nonylphenol | 50 | 14 | 21 |
| | | | | | |
| Example 23 | same as above | nonylphenol | 100 | 14 | 25 |
| | | | | | |
| Example 24 | same as above | octylphenol | 50 | 7 | 18 |
| | | | | | |
| Example 25 | same as above | octylphenol | 100 | 7 | 22 |
| | | | | | |
| Example 26 | same as above | dibutyl phthalate | 50 | 7 | 4 |
| | | | | | |
| Example 27 | same as above | dibutyl phthalate | 100 | 7 | 5 |
| | | | | | |
| Example 28 | same as above | dibutyl phthalate | 100 | 14 | 3 |
| | | | | | |
| Example 29 | Trametes versicolor (IFO-4941) | p-t-butylphenol | 100 | 7 | 18 |
| | | | | | |
| Example 30 | same as above | p-t-butylphenol | 100 | 14 | 2 |
| | | | | | |
| Example 31 | same as above | p-t-butylphenol | 200 | 14 | 2 |
| | | | | | |
| Example 32 | same as above | nonylphenol | 50 | 14 | 6 |
| | | | | | |
| Example 33 | same as above | nonylphenol | 100 | 14 | 7 |
| | | | | | |
| Example 34 | same as above | octylphenol | 50 | 7 | 14 |
| | | | | | |
| Example 35 | same as above | octylphenol | 100 | 7 | 16 |
| | | | | | |
| Example 36 | same as above | dibutyl phthalate | 50 | 7 | 11 |
| | | | | | |
| Example 37 | same as above | dibutyl phthalate | 100 | 7 | 17 |
| | | | | | |
| Example 38 | same as above | dibutyl phthalate | 100 | 14 | 4 |
| | | | | | |
| Example 39 | Pleurotus pulmonaris (IFO-31345) | p-t-butylphenol | 100 | 7 | 13 |
| | | | | | |
| Example 40 | same as above | p-t-butylphenol | 100 | 14 | 7 |
| | | | | | |
| Example 41 | same as above | p-t-butylphenol | 200 | 14 | 9 |
| | | | | | |
| Example 42 | same as above | nonylphenol | 50 | 14 | 14 |
| | | | | | |
| Example 43 | same as above | nonylphenol | 100 | 14 | 17 |
| | | | | | |
| Example 44 | same as above | octylphenol | 50 | 7 | 14 |
| | | | | | |
| Example 45 | same as above | octylphenol | 100 | 7 | 18 |
| | | | | | |
| Example 46 | same as above | dibutyl phthalate | 50 | 7 | 8 |
| | | | | | |
| Example 47 | same as above | dibutyl phthalate | 100 | 7 | 13 |
| | | | | | |
| Example 48 | same as above | dibutyl phthalate | 100 | 14 | 7 |
| | | | | | |
| Comparative Example 7 | - | p-t-butylphenol | 100 | 7 | 78 |
| | | | | | |
| Comparative Example 8 | - | p-t-butylphenol | 100 | 14 | 78 |
| | | | | | |
| Comparative Example 9 | - | p-t-butylphenol | 200 | 14 | 169 |
| | | | | | |
| Comparative Example 10 | - | nonylphenol | 50 | 14 | 39 |
| | | | | | |
| Comparative Example 11 | - | nonylphenol | 100 | 14 | 81 |
| | | | | | |
| Comparative Example 12 | - | octylphenol | 50 | 7 | 40 |
| | | | | | |
| Comparative Example 13 | - | octylphenol | 100 | 7 | 82 |
| | | | | | |
| Comparative Example 14 | - | dibutyl phthalate | 50 | 7 | 36 |
| | | | | | |
| Comparative Example 15 | - | dibutyl phthalate | 100 | 7 | 73 |
| | | | | | |
| Comparative Example 16 | - | dibutyl phthalate | 100 | 14 | 75 |

### Examples I-49 to I-58 and Comparative Examples I-17 to I-26

### (1) Adsorption of hardly decomposable substances

Active carbon [the diameter of particles: 0.10 mm; the diameter of pores: 20 Å; and the volume of pores: 0.25 ml/g] was dried at 160°C and cooled by being left standing in a desiccator containing silica gel. Into each of Erlenmeyer flasks having an inner volume of 500 ml, 10 g of the dried active carbon was placed.

To each flask, 100 ml of a culture fluid containing 5 g/liter of carboxymethylcellulose and 6 g/liter of a potato dextrose culture medium was added and the flask was sterilized at 121°C for 15 minutes in an autoclave. To the fluids containing the active carbon and the culture fluid, the hardly decomposable substances shown in Table I-5 in amounts also shown in Table I-5 were added and the resultant mixtures were shaken under rotation at 100 rpm for 24 hours so that the hardly decomposable substances were adsorbed to the active carbon.

### (2) Decomposition of the hardly decomposable substances

To the fluids containing the active carbon having adsorbed the hardly decomposable substances which were obtained in (1) described above, a solution prepared by dissolving 500 mg of laccase [manufactured by NOVOZYME Company; DENILITE] as the enzyme into 10 ml of water was added. The hardly decomposable substances were decomposed by shaking the obtained fluids under rotation at 60 rpm at 50°C for 2 days. In Comparative Examples I-17 to I-26, the same procedures as those conducted in Examples I-49 to I-58 were conducted except that no enzymes were added.

### (3) Evaluation of the degree of decomposition of the hardly decomposable substances

Each product of decomposition obtained in (2) described above was separated into the active carbon and a supernatant liquid. The active carbon and the supernatant liquid were each treated by extraction with ethyl acetate 3 times and the amounts of the residual hardly decomposable substances were measured in accordance with the high performance liquid chromatography. The results are shown in Table I-5.

**Table I-5 (1)**

| | Microorganism | Hardly decomposable substance | Amount of added substance (mg) | Time of decomposition (day) | Residual amount (mg) |
|---|---|---|---|---|---|
| Example 49 | laccase | p-t-butylphenol | 100 | 7 | 2 |
| | | | | | |
| Example 50 | laccase | p-t-butylphenol | 100 | 14 | 16 |
| | | | | | |
| Example 51 | laccase | p-t-butylphenol | 200 | 14 | 44 |
| | | | | | |
| Example 52 | laccase | nonylphenol | 50 | 14 | 12 |
| | | | | | |
| Example 53 | laccase | nonylphenol | 100 | 14 | 35 |
| | | | | | |
| Example 54 | laccase | octylphenol | 50 | 7 | 15 |
| | | | | | |
| Example 55 | laccase | octylphenol | 100 | 7 | 31 |
| | | | | | |
| Example 56 | laccase | dibutyl phthalate | 50 | 7 | 3 |
| | | | | | |
| Example 57 | laccase | dibutyl phthalate | 100 | 7 | 3 |
| | | | | | |
| Example 58 | laccase | dibutyl phthalate | 150 | 14 | 9 |
| | | | | | |
| Comparative Example 17 | - | p-t-butylphenol | 100 | 7 | 37 |
| | | | | | |
| Comparative Example 18 | - | p-t-butylphenol | 100 | 14 | 79 |
| | | | | | |
| Comparative Example 19 | - | p-t-butylphenol | 200 | 14 | 162 |
| | | | | | |
| Comparative Example 20 | - | nonylphenol | 50 | 14 | 37 |
| | | | | | |
| Comparative Example 21 | - | nonylphenol | 100 | 14 | 81 |
| | | | | | |
| Comparative Example 22 | - | octylphenol | 50 | 7 | 40 |
| | | | | | |
| Comparative Example 23 | - | octylphenol | 100 | 7 | 82 |
| | | | | | |
| Comparative Example 24 | - | dibutyl phthalate | 50 | 7 | 35 |
| | | | | | |
| Comparative Example 25 | - | dibutyl phthalate | 100 | 7 | 68 |
| | | | | | |
| Comparative Example 26 | - | dibutyl phthalate | 100 | 14 | 65 |

### Example II-1 and Comparative Example II-1

Two glass columns having a diameter of 8 cm each packed with 1 kg of active carbon [the diameter of particles: 0.05 mm; the diameter of pores: 20 Å; and the volume of pores: 0.15 ml/g] were used. The columns were placed in a bath kept at 50°C. Waste water containing 4.8% of NaCl and 114 ppm of bisphenol A was passed through each column at a rate of 0.5 liters per minute for 60 hours and the residual bisphenol A in the waste water was adsorbed to the adsorbent. Bisphenol A contained in the waste water was a substance remained unreacted in the interface polymerization to obtain a polycarbonate resin using bisphenol A as a raw material

Then, the flow of the waste water was stopped and 40 liters of distilled water was passed through one of the columns for desalting. For comparison, 40 liters of an aqueous solution containing 4.8% of NaCl was passed through the other column.

A laccase agent (NS44103; manufactured by NOVOZYMES Company) in an amount of 5 g was dissolved into 5 liters of distilled water. The obtained solution was passed through the desalted column from an upper portion of the column and the excessive amount of the solution was taken out at a lower portion of the column so that an upper portion of the column packed with the active carbon was filled with the enzyme liquid (Example II-1). For comparison, no enzyme liquids were passed through the other column (Comparative Example II-1).

The decomposition of the adsorbed hardly decomposable substances was conducted while the air was passed through the column from a lower portion of the column at a rate of 1 liter per minute so that the active carbon was kept in the fluidized condition for 4 hours. Then, the flow of the air was stopped and the amount of the adsorbed bisphenol A was determined as follows. The active carbon was taken out of the glass column. After the active carbon was sufficiently mixed, a portion of the active carbon in an amount of 20 g was taken out and treated by extraction with 500 ml of acetone 3 times. Then, the quantitative analysis was conducted and the amount of bisphenol A which remained in the entire column and recovered was calculated. The results are shown in Table II-1.

In Table II-1, "Example II-1" is expressed as "Example 1." for convenience. Comparative Example II-1 is expressed in a similar manner. In Tables II-2 to II-8, Examples and Comparative Examples are expressed in a similar manner.

**Table II-1**

| | Desalting | Treatment with enzyme | Amount of recovered bisphenol A (mg) |
|---|---|---|---|
| Example 1 | conducted | conducted | 23 |
| | | | |
| Comparative Example 1 | none | none | 184 |

### Example II-2

The same procedures as those conducted in Example II-1 were repeated 20 times using the same column for the decomposition of bisphenol A adsorbed to the active carbon and for the regeneration except that the active carbon was not washed with acetone. When the 20 procedures were completed, the concentration of bisphenol A in water flowing out of the column was 1 ppb or smaller. Then, 20 g of the active carbon was taken out of the column, treated by extraction with 500 ml of acetone 3 times and the amount of bisphenol A which remained in the entire column and recovered was calculated.

Based on the calculation on the result of Comparative Example II-2, it was estimated that 3.5 g or more bisphenol was adsorbed. The amount of the recovered bisphenol A was 72 mg and it was found that the most of bisphenol A was decomposed and the active carbon could be used repeatedly. The amount of saturated adsorption of bisphenol A was 83 g per 1 kg of bisphenol A.

### Examples II-3 and II-4

A glass column having a diameter of 2 cm was packed with 10 g of active carbon and 1 liter of water eluted from a landfill composed of waste materials containing various types of salts (2.3% as the concentration of NaCl) was passed through the column from an upper portion of the column at a rate of 100 ml/minute. Water passed through the active carbon and coming out of a lower portion of the column was received into an Erlenmeyer flask having an inner volume of 2 liters and then returned by a pump to the upper portion of the column for circulation. Separately, 200 g of bisphenol A was dissolved into 10 ml of ethanol and the obtained ethanol solution was supplied into the water in the Erlenmeyer flask by a micro-pump over 30 hours so that bisphenol A was completely adsorbed to the active carbon.

Another set of the above apparatus was prepared and the same procedures were conducted. After bisphenol A was adsorbed to the active carbon, 1 liter of distilled water was passed through the column for desalting and, then, the temperature of the column was maintained by passing water kept at 55°C through a jacket of the column.

Laccase agent (NS44103; manufactured by NOVOZYMES Company) in an amount of 1 g was dissolved into 1 liter of a maleic acid buffer solution at a pH of 6.5. After the obtained solution was heated at 55°C, the solution was passed through one of the columns from an upper portion of the column at a rate of 200 ml/minute. The adsorbed bisphenol A was decomposed for 2 hours while water flowing out from a lower portion of the column was returned to the upper portion of the column by a pump (Example II-3). Separately, 1 liter of a maleic acid buffer solution to which 1 g of the enzyme (NS44103; manufactured by NOVOZYMES Company) and 0.3 g of a mediator (NS44104; manufactured by NOVOZYMES Company) were added was prepared and the same procedures as those conducted above were conducted using the other glass column (Example II-4). During the circulation, the air was not blown into the column and the decomposition proceeded sufficiently with the enzyme dissolved in the flowing solution.

The circulation of the enzyme solution was stopped 2 hours after the start of the circulation. Immediately after stopping the circulation, 1 liter of acetone was passed through the column from the upper portion of the column in 10 minutes and bisphenol A remaining in the active carbon was eluted and determined. The results are shown in Table II-2.

**Table II-2**

| | Enzyme | Mediator | Amount of recovered bisphenol A (mg) |
|---|---|---|---|
| Example 3 | NS44103 | none | 28 |
| | | | |
| Example 4 | NS44103 | NS44104 | 36 |

In general, a mediator is necessary for decomposition of bisphenol A with laccase. However, when bisphenol A was decomposed with NS44103, no mediators were necessary and the process was economical.

### Examples II-5 to II-10 and Comparative Examples II-2 and II-3

### (1) Culture of microorganisms

A potato dextrose culture medium [manufactured by DIFCO Company] in an amount of 24 g per 1 liter of city water was dissolved into city water. To the resultant solution, 10 g of carboxymethylcellulose was added and a culture medium was prepared. Into each of 8 Erlenmeyer flasks having an inner volume of 2 liters, 400 ml of the prepared culture medium was placed and the flasks were sealed with a cotton cap and sterilized by heating at 121°C for 20 minutes.

As the microorganism, Schizophyllum commune: IFO6505 was used in Examples II-5 and II-6, Trametes versicolor: IFO4941 was used in Examples II-7 and II-8, and Pleurotus pulmonaris: IFO31345 was used in Examples II-9 and II-10. The culture media cooled at the room temperature were inoculated with the respective microorganisms. As the seed fungi of these microorganisms, seed fungi prepared by growing in an oat meal agar culture medium were used. Each seed fungus in an amount of one platinum microspoonful was used for the inoculation and cultured at 26°C under the rotation at 40 rpm for 7 days. The obtained product of the culture was used as the source of inoculation with the microorganism.

### (2) Adsorption of hardly decomposable substances

As the apparatus for adsorption of bisphenol A, a glass column having a diameter of 5 cm and a height of 30 cm which was packed with 80 g of particulate active carbon [the diameter of particles: 1.5 mm; the diameter of pores: 30 Å; and the volume of pores: 0.35 ml/g] was used. Twenty glass columns described above were arranged in parallel. Waste water of polymerization to obtain a polycarbonate which contained bisphenol A and no microorganisms (the concentration of NaCl: 4.2% by weight) was introduced into the glass columns through an inlet tube disposed at an upper portion of each glass column at a flow rate of 2 liters/hour while pH of the waste water was adjusted at 7 and bisphenol A in the waste water was adsorbed to the particulate active carbon. The introduction of the waste water was continued for 2 days. Waste water cleaned with the particulate active carbon was recovered at an outlet tube disposed at a lower portion of each glass column.

### (3) Decomposition of the hardly decomposable substances adsorbed to the adsorbent

In a chamber kept at a constant temperature of 28°C, 400 ml of each culture fluid of the microorganism obtained in (1) as described above was slowly added to the glass column through an inlet tube disposed at an upper portion of the glass column and water in an excessive amount was taken out from an outlet tube at a lower portion of the glass column. Then, the air was passed through a filter containing no microorganisms at the bottom portion of the column and adjusted at the humidity of saturation by passing through water containing no microorganisms and the air thus conditioned was introduced into the glass column from an inlet disposed at a lower portion of the glass column at a rate of 50 ml per minute.

For the decomposition of bisphenol A adsorbed to the inside of pores of the adsorbent, a culture fluid of the same microorganism was added to two glass columns. One of the columns was treated for decomposition of the hardly decomposable substances with the microorganism for 1 day and the other column was treated for 2 days. In Comparative Examples II-2 and II-3, the same procedures as those conducted in Examples II-5 to II-10 were conducted except that a culture medium inoculated with no microorganisms was added. The concentration of NaCl in water remaining in gaps in the active carbon was 0.3% or smaller.

### (4) Evaluation of the degree of decomposition of the hardly decomposable substances

When the decomposition of bisphenol A in (3) described above was completed, the particulate active carbon in each glass column was taken out. The inside of each glass column was washed with 100 ml of dichloromethane 3 times and the washing liquids were added to the particulate active carbon taken out from the respective glass column. The particulate active carbon from each glass column was transferred to a Soxhlet extractor and bisphenol A adsorbed to the particulate active carbon was extracted with toluene. The amount of the extracted bisphenol A was determined in accordance with the gas chromatography-mass analysis (GC-MS).

**Table II-3**

| | Microorganism | Time of decomposition (day) | Amount of recovered unreacted bisphenol A (mg) |
|---|---|---|---|
| Example 5 | Schizophyllum commune IFO-6505 | 1 | 6.1 |
| | | | |
| Example 6 | Schizophyllum commune IFO-6505 | 2 | 4.9 |
| | | | |
| Example 7 | Trametes versicolor IFO-4941 | 1 | 8.4 |
| | | | |
| Example 8 | Trametes versicolor IFO-4941 | 2 | 7.5 |
| | | | |
| Example 9 | Pleurotus pulmonaris IFO-31345 | 1 | 16.4 |
| | | | |
| Example 10 | Pleurotus pulmonaris IFO-31345 | 2 | 14.5 |
| Comparative Example 2 | - | 1 | 49.1 |
| | | | |
| Comparative Example 3 | - | 2 | 39.5 |

### Examples II-11 to II-13 and Comparative Example II-4

Into 100 ml of city water, 1 g of carboxymethylcellulose was dissolved. To the resultant solution, 10 g of active carbon was added and the obtained mixture was stirred. To the obtained mixture, 150 mg of KH₂PO₄, 250 mg of ammonium nitrate, 150 mg of Na₂HPO₄·12H₂O, 50 mg of MgSO₄·7H₂O, 1.6 mg of CuSO₄·5H₂O, 0.2 mg of thiamine hydrochloride, 100 mg of polypeptone and 100 g of an yeast extract were added and dissolved into the mixture. To the resultant mixture, 100 mg of bisphenol A was added and the obtained mixture was stirred for 4 hours by a magnetic stirrer.

The obtained mixture was sterilized at 121°C for 15 minutes and then inoculated with various white rot fungi. After 10 days, 200 mg of ethyl acetate was added and bisphenol A was extracted. This procedure was repeated 5 times and, then, the amount of the extracted bisphenol A was determined (Examples II-11 to II-13). For comparison, the same procedures as those described above were conducted in Comparative Example II-4 except that no filamentus fungi were added. The results are shown in Table II-4.

**Table II-4**

| | Microorganism | Amount of extracted bisphenol A (mg) |
|---|---|---|
| Example 11 | Schizophyllum commune IFO-6505 | 11 |
| | | |
| Example 12 | Trametes versicolor IFO-4941 | 27 |
| | | |
| Example 13 | Pleurotus pulmonaris IFO-31345 | 21 |
| Comparative Example 4 | - | 64 |

### Examples II-14 to II-18 and Comparative Examples II-5 to II-9

Into Erlenmeyer flasks having an inner volume of 500 ml, 10 g of particulate active carbon was placed and then 100 ml of distilled water was added. To the obtained mixtures, bisphenol A dissolved into a small amount of acetone was added in an amount of 2.0 mg in Example II-14, 4.0 mg in Example II-15, 10.0 mg in Example II-16, 30.0 mg in Example II-17 and 50.0 mg in Example II-18. The obtained mixtures were shaken under rotation at 60 rpm for 4 hours so that bisphenol A was adsorbed to the active carbon. To the water containing active carbon prepared above, 200 mg of a laccase agent (NS44103; manufactured by NOVOZYME Company) was added and the obtained mixtures were shaken at 40°C for 8 hours under rotation at 40 rpm.

The active carbon and water were separated from each other by a glass filter and the water was treated by extraction with 300 ml of ethyl acetate 3 times. The active carbon was washed with 200 ml of acetone 2 times and with ethyl acetate 3 times. The acetone solution was concentrated under a reduced pressure to obtain 10 ml of the concentrated solution. The entire amount of ethyl acetate solution obtained by the extraction was added to the concentrated acetone solution. The resultant mixed solution was dehydrated with sodium sulfate and concentrated under a reduced pressure and the amount of bisphenol A which was unreacted and extracted was determined in accordance with the high performance liquid chromatography. In Comparative Examples II-5 to II-9, the same procedures as those conducted in Examples II-14 to II-18, respectively, were conducted except that no enzyme agents were added. The results are shown in Table II-5.

**Table II-5**

| | Amount of added bisphenol A (mg) | Amount of extracted bisphenol A (mg) |
|---|---|---|
| Example 14 | 2.0 | 0.1 or smaller |
| | | |
| Comparative Example 5 | 2.0 | 1.42 |
| | | |
| Example 15 | 4.0 | 0.34 |
| | | |
| Comparative Example 6 | 4.0 | 2.97 |
| | | |
| Example 16 | 10.0 | 0.43 |
| | | |
| Comparative Example 7 | 10.0 | 7.66 |
| | | |
| Example 17 | 30.0 | 0.51 |
| | | |
| Comparative Example 8 | 30.0 | 24.60 |
| | | |
| Example 18 | 50.0 | 12.32 |
| | | |
| Comparative Example 9 | 50.0 | 36.20 |

### Examples II-19 to II-24 and Comparative Examples II-10 and II-11

### (1) Adsorption of bisphenol A

Waste water which was discharged during reverse washing of waste water obtained in polymerization using bisphenol A as a raw material and contained foreign substances such as fine particles of active carbon and particulate suspended substances was treated. The waste water was taken into an adsorption column packed with active carbon [the diameter of particles: 1.0 mm; the diameter of pores: 20 Å; and the volume of pores: 0.25 ml/g] and having an inner volume of 5 m³ and, after pH was adjusted at 7.0, was left standing for 12 hours. Since pH decreased to 6.2 after 12 hours, pH was adjusted at 7.0 again and the column containing the waste water was left standing for 12 hours. Then, pH was measured and was found to be 6.6. The waste water was filtered and the precipitates were recovered. To the precipitates, city water in an amount 3 times as much as the amount of the precipitates was added. The obtained mixture was stirred and treated by filtration and desalting. The concentration f NaCl was 0.28% by weight based on the amount of the dried substances.

### (2) Decomposition of the hardly decomposable substances adsorbed to the adsorbent

After the precipitates obtained in (1) described above were uniformly mixed, 20 g of the precipitates (the content of water: 52% (w/v)) were added to each of 8 Erlenmeyer flasks having an inner volume of 500 ml. Then, after 2 g of corn steep liquor (the content of water: 78% (w/v)) was added to each flask, the flasks were sealed with silicone stoppers, placed into a boiling water bath at 100°C and sterilized for 2 hours.

After the treated flasks were cooled at the room temperature, the flasks were inoculated separately with microorganisms shown in Table II-6. The microorganisms were then cultured by leaving the flasks standing at 28 °C for the period of time shown in Table II-6 (Examples) II-19 to II-24). In Comparative Examples II-10 and II-11, the same procedures as those conducted in Examples II-19 to II-24 were conducted except that the inoculation with microorganisms was not conducted. The results are shown in Table II-6.

**Table II-6**

| | Microorganism | Time of culture (day) | Amount of recovered bisphenol A (µg) |
|---|---|---|---|
| Example 19 | Schizophyllum commune IFO-6505 | 7 | 63 |
| | | | |
| Example 20 | Schizophyllum commune IFO-6505 | 14 | 31 |
| | | | |
| Example 21 | Trametes versicolor IFO-4941 | 7 | 76 |
| | | | |
| Example 22 | Trametes versicolor IFO-4941 | 14 | 48 |
| | | | |
| Example 23 | Pleurotus pulmonaris IFO-31345 | 7 | 82 |
| | | | |
| Example 24 | Pleurotus pulmonaris IFO-31345 | 14 | 44 |
| Comparative Example 10 | - | 7 | 215 |
| | | | |
| Comparative Example 11 | - | 14 | 201 |

### Examples II-25 to II-33 and Comparative Examples II-12 to II-15

After waste water containing bisphenol A and no microorganisms was passed through an adsorption column having an inner volume of 5 m³ and packed with particulate active carbon [the diameter of particles: 1.5 mm; the diameter of pores: 15 Å; and the volume of pores: 0.20 ml/g] for 6 months, 30 tons of industrial water was passed through the column and the active carbon was taken out. The active carbon (the content of water: 54% (w/v)) in an amount of 1,500 g was spread over an aluminum vat (30×40 cm). Separately, 40 g of corn steep liquor (the content of water: 78% (w/v)) and 40 g of waste molasses (the content of water: 82% (w/v)) were dissolved into 1 liter of city water and the resultant solution was sterilized at 121°C for 20 minutes to prepare a nutrient. The prepared nutrient in an amount of 360 ml was added to the above active carbon and mixed together. To the obtained mixture, 100 ml of a culture liquid of a microorganism obtained by liquid culture in accordance with the same process as those conducted in Examples II-5 to II-10 was added. The aluminum vat was covered with a cap of an aluminum vat and the obtained mixture was cultured in a culture tank under the humidity of 100% at 28°C for 7 to 60 days.

After the entire amount of the mixture containing the active carbon and the microorganisms was recovered and weighed, 100 g of the recovered mixture was treated by extraction with 1 liter of ethyl acetate 3 times and, then, the amount of bisphenol A in the solid components was determined (Examples II-25 to II-33). In Comparative Examples II-12 to II-15, the same procedures as those conducted in Examples II-25 to II-33 were conducted except that the inoculation with microorganisms was not conducted. The results of the evaluation of the degree of decomposition of bisphenol A are shown in Table II-7.

**Table II-7**

| | Microorganism | Time of culture (day) | Amount of residual bisphenol A (ppb/g active carbon) |
|---|---|---|---|
| Example 25 | Schizophyllum commune IFO-6505 | 14 | 189 |
| | | | |
| Example 26 | Schizophyllum commune IFO-6505 | 30 | 129 |
| | | | |
| Example 27 | Schizophyllum commune IFO-6505 | 60 | 103 |
| | | | |
| Example 28 | Trametes versicolor IFO-4941 | 7 | 284 |
| | | | |
| Example 29 | Trametes versicolor IFO-4941 | 30 | 155 |
| | | | |
| Example 30 | Trametes versicolor IFO-4941 | 60 | 142 |
| | | | |
| Example 31 | Pleurotus pulmonaris IFO-31345 | 7 | 306 |
| | | | |
| Example 32 | Pleurotus pulmonaris IFO-31345 | 30 | 106 |
| | | | |
| Example 33 | Pleurotus pulmonaris IFO-31345 | 60 | 93 |
| Comparative Example 12 | - | 7 | 793 |
| | | | |
| Comparative Example 13 | - | 14 | 757 |
| | | | |
| Comparative Example 14 | - | 30 | 711 |
| | | | |
| Comparative Example 15 | - | 60 | 678 |

### Examples II-34 to II-42 and Comparative Examples II-16 to II-18

### (1) Adsorption of bisphenol A

Into each of Erlenmeyer flasks having an inner volume of 500 ml, 10 g of active carbon [the diameter of particles: 1.0 mm; the diameter of pores: 20 Å; and the volume of pores: 0.25 ml/g] was weighed and placed.

To each of the above Erlenmeyer flasks, 100 ml of a culture liquid containing 10 g/liter of carboxymethylcellulose and 6 g/liter of potato dextrose was added and the resultant mixture was sterilized at 121°C for 15 minutes in an autoclave. To the fluid containing the active carbon and the culture liquid, bisphenol A was. added in a prescribed amount shown in Table II-8 and the obtained mixture was shaken under rotation at 100 rpm for 24 hours so that bisphenol A was adsorbed to the active carbon.

### (2) Decomposition of bisphenol A

The fluid containing the active carbon having adsorbed bisphenol A obtained in (1) described above was inoculated with 10 ml of the culture liquid of microorganisms cultured in accordance with the same procedures as those conducted in (1) of Examples II-5 to II-10 and the resultant mixture was cultured by being shaken under rotation at 30 rpm so that bisphenol A was decomposed with the microorganisms (Examples II-34 to II-42). In Comparative Examples II-16 to II-18, the same procedures as those conducted in Examples II-34 to II-42 were conducted except that the inoculation with the microorganisms was not conducted.

### (3) Evaluation of the degree of decomposition of bisphenol A

The reaction product of the decomposition obtained in (2) described above was separated into the active carbon and a supernatant liquid. The active carbon and the supernatant liquid were each treated by extraction with ethyl acetate 3 times and the amount of the residual bisphenol A was measured in accordance with the high performance liquid chromatography. The results are shown in Table II-8.

**Table II-8**

| | Microorganism | Amount of added bisphenol A (mg) | Time of decomposition (day) | Amount of residual bisphenol A (mg) |
|---|---|---|---|---|
| Example 34 | Schizophyllum commune IFO-6505 | 100 | 7 | 33 |
| | | | | |
| Example 35 | Schizophyllum commune IFO-6505 | 100 | 14 | 26 |
| | | | | |
| Example 36 | Schizophyllum commune IFO-6505 | 200 | 14 | 31 |
| | | | | |
| Example 37 | Trametes versicolor IFO-4941 | 100 | 7 | 28 |
| | | | | |
| Example 38 | Trametes versicolor IFO-4941 | 100 | 14 | 22 |
| | | | | |
| Example 39 | Trametes versicolor IFO-4941 | 200 | 14 | 24 |
| | | | | |
| Example 40 | Pleurotus pulmonaris IFO-31345 | 100 | 7 | 40 |
| | | | | |
| Example 41 | Pleurotus pulmonaris IFO-31345 | 100 | 14 | 32 |
| | | | | |
| Example 42 | Pleurotus pulmonaris IFO-31345 | 200 | 14 | 46 |
| Comparative Example 16 | - | 100 | 7 | 89 |
| | | | | |
| Comparative Example 17 | - | 100 | 14 | 86 |
| | | | | |
| Comparative Example 18 | - | 200 | 14 | 175 |

### INDUSTRIAL APPLICABILITY

In accordance with the process of the present invention, the adsorbent can be regenerated by decomposing and removing the hardly decomposable substances adsorbed to the adsorbent from the adsorbent without possibility of adverse effects on the environment.

## Claims

1. A process for regenerating an adsorbent having adsorbed hardly decomposable substances, the process comprising decomposing the hardly decomposable substances by bringing the hardly decomposable substances into contact with at least one of microorganisms and enzymes at an inside or a peripheral portion of pores of the adsorbent.

2. A process according to Claim 1, wherein the hardly decomposable substances are brought into contact with at least one of microorganisms and enzymes after the adsorbent having adsorbed hardly decomposable substances is treated by sterilization.

3. A process according to Claim 1, wherein waste water comprising the hardly decomposable substances is treated by sterilization, the sterilized waste water is passed through an adsorbent layer so that the hardly decomposable substances are adsorbed to the adsorbent layer, and the adsorbed hardly decomposable substances are brought into contact with at least one of microorganisms and enzymes.

4. A process according to Claim 1, wherein the hardly decomposable substances and at least one of microorganisms and enzymes are brought into contact with each other at a pH in a range of 3 to 10.

5. A process according to Claim 1, wherein the hardly decomposable substances and at least one of microorganisms and enzymes are brought into contact with each other while a gas comprising oxygen is supplied.

6. A process according to Claim 1, wherein the hardly decomposable substances and at least one of microorganisms and enzymes are brought into contact with each other in a presence of an organic solvent.

7. A process according to Claim 1, wherein the adsorption of the hardly decomposable substances to the adsorbent and the contact between the adsorbed hardly decomposable substances and at least one of microorganisms and enzymes are conducted simultaneously.

8. A process according to Claim 1, wherein the adsorbed hardly decomposable substances are brought into contact with the microorganisms after the adsorbent having adsorbed hardly decomposable substances is treated by sterilization in a presence of a carbon source.

9. A process according to any one of Claims 1 to 8, wherein the hardly decomposable substance is at least one substance selected from a group consisting of halogenated dioxins, halogenated benzofurans, polychlorinated biphenyl, alkylphenols, halogenated phenols, halogenated alkanes, halogenated alkenes, esters of phthalic acids and polycyclic aromatic hydrocarbons.

10. A process according to any one of Claims 1 to 8, wherein the hardly decomposable substance is a bisphenol.

11. A process according to any one of Claims 1 to 8, wherein the adsorbent is an inorganic porous material or an organic porous material.

12. A process according to any one of Claims 1 to 8, wherein the adsorbent is a material selected from active carbon, ion exchange resins, activated day, zeolite and ashes of incineration.

13. A process according to any one of Claims 1 to 8, wherein the microorganism is a filamentus fungus.

14. A process according to Claim 13, wherein the filamentus fungus is a fungus selected from white rot fungi and fungi belonging to genera of Aspergillus, Rhizoctonia and Botrytis.

15. A process according to any one of Claims 1 to 8, wherein the enzyme is an enzyme which is produced by the microorganism to an outside of a cell body of the microorganism and decomposes the hardly decomposable substances.

16. A process according to any one of Claims 1 to 8, wherein at least one enzyme selected from peroxidase, lignin peroxidase and manganese peroxidase is used as the enzyme and the hardly decomposable substances are brought into contact with the selected enzyme in a presence of hydrogen peroxide.

17. A process according to any one of Claims 1 to 8, wherein laccase is used as the enzyme and the hardly decomposable substances are brought into contact with laccase.

18. A process according to Claim 17, wherein laccase is used as the enzyme and the hardly decomposable substances are brought into contact with laccase in a presence of a mediator.

19. A process according to Claim 8, wherein the carbon source is a substance comprising at least one compound selected from sugars, cellulose ethers soluble in water, cellulose esters and cellulose esters soluble in water.

20. A process according to Claim 10, wherein the adsorbent having adsorbed bisphenols is regenerated after salts present in an apparatus for regeneration are removed.

21. A process according to Claim 20, wherein the salts are salts having chlorine atom.

22. A process according to Claim 10, wherein the bisphenol is brought into contact with at least one of filamentus fungi and enzymes in a presence of molecular or atomic oxygen.

23. A process according to Claim 10, wherein the bisphenol is obtained as a waste substance discharged from apparatuses for producing polycarbonates and epoxy resins.
